# EUROPEAN PATENT APPLICATION

(11) **EP 4 654 063 A2**
(43) Date of publication of application: **26.11.2025**
(21) Application number: 25202060.7
(22) Date of filing: 15.09.2025
(51) Int. Cl.: G06F 21/73, G06F 21/74, G06F 21/85

(54) **METHOD FOR ACCESS THROUGH BUS IN INTEGRATED CIRCUIT, INTEGRATED CIRCUIT, AND ELECTRONIC DEVICE**

(30) Priority: 30.10.2024 CN 202411533504
(71) Applicant: XG TECH PTE. LTD., Singapore 179098 (SG)
(72) Inventor: LIU, Tao, 179098 Singapore (SG); YU, Jianfeng, 179098 Singapore (SG)
(74) Representative: v. Bezold & Partner Patentanwälte - PartG mbB

(57) **Abstract**

Disclosed are a method for access through a bus in an integrated circuit, an integrated circuit, and an electronic device, which relate to field of integrated circuit technology. The method includes: generating, through a first hardware unit in a first functional safety level domain, a first request for access; determining, based on the first request for access, a first identification of the first hardware unit; reading, from a register, first configuration information corresponding to a second hardware unit in a second functional safety level domain, the first configuration information including a second identification of a target hardware unit, the target hardware unit being in a functional safety level domain of a safety level higher than a safety level of the second functional safety level domain; determining, based on the first identification and the second identification, an access permission the first hardware unit has to the second hardware unit; and controlling, based on the access permission, transmission of the first request for access from a bus to the second hardware unit. With a technical solution according to this disclosure, it is enabled to control transmission of a request for access between hardware units in different functional safety level domains based on safety levels, guaranteeing a safety requirement of a functional safety level domain of a high safety level.

## Description

### TECHNICAL FIELD

This disclosure relates to field of integrated circuit technology, and more particularly, to a method for access through a bus in an integrated circuit, an integrated circuit, and an electronic device.

### BACKGROUND

A system on chip (SoC), also referred to as an integrated circuit, may include a plurality of hardware units, and may implement different functions through the plurality of hardware units. Based on different safety requirements of the different functions, the integrated circuit may be divided into at least one functional safety level domain, where a functional safety level domain includes at least one hardware unit. Different functional safety level domains correspond to different safety levels, where a safety level is configured for representing a safety requirement of a function implemented by a respective hardware unit in a respective functional safety level domain. The higher a safety level of a functional safety level domain is, the higher a safety requirement of a function implemented by a respective hardware unit in the functional safety level domain, whereas the lower a safety level of a functional safety level domain is, the lower a safety requirement of a function implemented by a respective hardware unit in the functional safety level domain.

Hardware units in different functional safety level domains may access each other through a bus, thus enabling communication between the functional safety level domains.

### SUMMARY

If something goes wrong with a hardware unit in a functional safety level domain of a low safety level, as the hardware unit in the functional safety level domain of the low safety level may still transmit a request for access to a hardware unit in a functional safety level domain of a high safety level through a bus, the request for access may cause the hardware unit in the functional safety level domain of the high safety level to fail to operate normally, which then fails to guarantee a safety requirement of the functional safety level domain of the high safety level.

To solve the above technical problem, this disclosure provides a method for access through a bus in an integrated circuit, an integrated circuit, and an electronic device, capable of solving the problem that the hardware unit in the functional safety level domain of the high safety level fails to operate normally due to that something goes wrong with the hardware unit in the functional safety level domain of the low safety level.

A first aspect of this disclosure provides a method for access through a bus in an integrated circuit, including: generating, through a first hardware unit in a first functional safety level domain, a first request for access; determining, based on the first request for access, a first identification of the first hardware unit; reading, from a register, first configuration information corresponding to a second hardware unit in a second functional safety level domain, the first configuration information including a second identification of a target hardware unit, the target hardware unit being in a functional safety level domain of a safety level higher than a safety level of the second functional safety level domain; determining, based on the first identification and the second identification, an access permission the first hardware unit has to the second hardware unit; and controlling, based on the access permission the first hardware unit has to the second hardware unit, transmission of the first request for access from a bus to the second hardware unit.

A second aspect of this disclosure provides an integrated circuit, including: a controller; a first hardware unit, corresponding to a first functional safety level domain; a second hardware unit, corresponding to a second functional safety level domain; and a register, storing first configuration information corresponding to the second hardware unit, the first configuration information including a second identification of a target hardware unit, the target hardware unit being in a functional safety level domain of a safety level higher than a safety level of the second functional safety level domain, wherein the first hardware unit is configured for generating a first request for access; the controller is configured for determining, based on the first request for access, a first identification of the first hardware unit; the controller is further configured for reading, from the register, the first configuration information; the controller is further configured for determining, based on the first identification and the second identification, an access permission the first hardware unit has to the second hardware unit; and the controller is further configured for controlling, based on the access permission the first hardware unit has to the second hardware unit, transmission of the first request for access from a bus to the second hardware unit.

A third aspect of this disclosure provides a computer-readable storage medium which stores a computer program for implementing the method for access through a bus in an integrated circuit according to the first aspect.

A fourth aspect of this disclosure provides an electronic device, which includes: a processor, and a memory configured for storing processor-executable instructions, wherein the processor is configured for reading and executing the processor-executable instructions in the memory to implement the method for access through a bus in an integrated circuit according to the first aspect; or an electronic device, including the integrated circuit according to the second aspect.

A fifth aspect of this disclosure provides a computer program product. When instructions in the computer program product are executed by a processor, the method for access through a bus in an integrated circuit according to the first aspect is implemented.

Based on a method for access through a bus in an integrated circuit according to this disclosure, when a first request for access is transmitted by a first hardware unit in a first functional safety level domain to a second hardware unit in a second functional safety level domain through a bus, transmission of the first request for access on the bus may be controlled based on safety levels of the first functional safety level domain and the second functional safety level domain. If in one of the first functional safety level domain and the second functional safety level domain that has the lower safety level, something goes wrong with a hardware unit, as it is enabled to control transmission of the first request for access from the bus to a hardware unit in the functional safety level domain of the higher safety level, a first request for access transmitted when something goes wrong with a hardware unit in the functional safety level domain of the low safety level may be controlled accordingly, which thereby enables to effectively guarantee a hardware unit in the functional safety level domain of the high safety level to operate normally, and then guarantee the safety requirement of the functional safety level domain of the high safety level.

### BRIEF DESCRIPTION OF DRAWINGS

FIG. 1 is a diagram of architecture of an integrated circuit according to an illustrative embodiment of this disclosure.
FIG. 2 is a diagram of architecture of an integrated circuit according to another illustrative embodiment of this disclosure.
FIG. 3 is a diagram of architecture of an integrated circuit according to still another illustrative embodiment of this disclosure.
FIG. 4 is a flowchart of a method for access through a bus according to an illustrative embodiment of this disclosure.
FIG. 5 is a flowchart of a method for access through a bus according to another illustrative embodiment of this disclosure.
FIG. 6 is a flowchart of a method for access through a bus according to still another illustrative embodiment of this disclosure.
FIG. 7 is a flowchart of a method for access through a bus according to yet another illustrative embodiment of this disclosure.
FIG. 8 is a diagram of a structure of an electronic device according to an illustrative embodiment of this disclosure.

### DETAILED DESCRIPTION OF THE EMBODIMENTS

To explain this disclosure, illustrative embodiments of this disclosure are elaborated below with reference to accompanying drawings. Clearly, the embodiments described are merely some, rather than all, embodiments of this disclosure. It should be understood that this disclosure is not limited to the illustrative embodiments.

It should be noted that unless otherwise specified, the scope of this disclosure is not limited to relative arrangements, numeric expressions, and numerical values of components and steps described in these embodiments.

### Disclosure overview

A system on chip (SoC), also referred to as an integrated circuit, may include a plurality of hardware units, and may implement different functions through the plurality of hardware units. Based on different safety requirements of the different functions, the integrated circuit may be divided into at least one functional safety level domain, where a functional safety level domain includes at least one hardware unit. Different functional safety level domains correspond to different safety levels, where a safety level is configured for representing a safety requirement of a function implemented by a respective hardware unit in a respective functional safety level domain. For example, the higher a safety level of a functional safety level domain is, the higher a safety requirement of a function implemented by a respective hardware unit in the functional safety level domain, whereas the lower a safety level of a functional safety level domain is, the lower a safety requirement of a function implemented by a respective hardware unit in the functional safety level domain.

In some examples, a hardware unit included in an integrated circuit may be configured for implementing a vehicle related function. The integrated circuit may be divided into functional safety level domains based on road vehicles-functional safety standard (such as ISO 26262). A safety level of a functional safety level domain may include a quality management (QM) level and an automotive safely integrity level (ASIL). A QM level is lower than an ASIL level. ASIL levels may include ASIL-A, ASIL-B, ASIL-C, and ASIL-D, in ascending order.

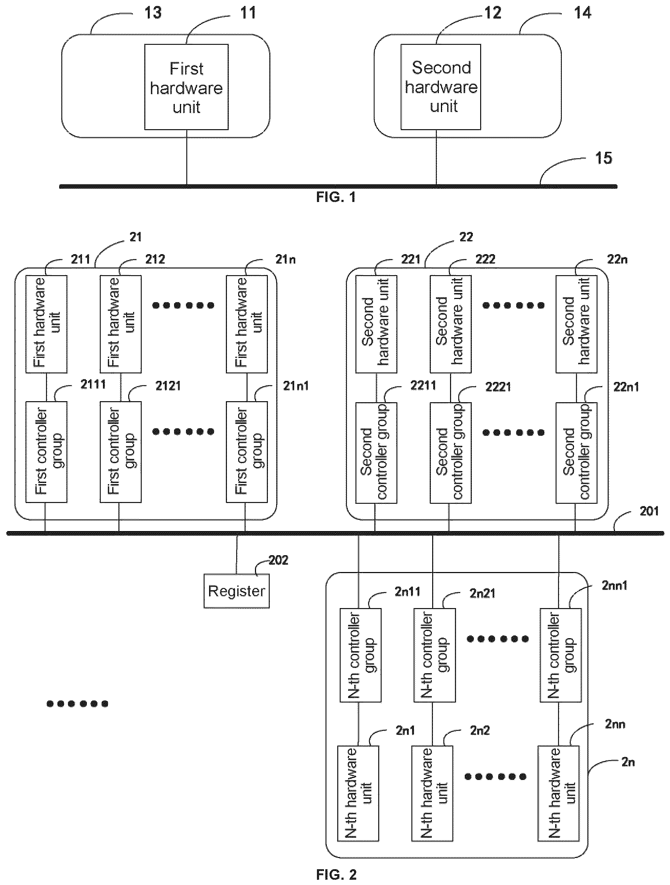

FIG. 1 is a diagram of architecture of an integrated circuit according to an illustrative embodiment of this disclosure.

As shown in FIG. 1, the integrated circuit may include a first hardware unit 11 and a second hardware unit 12. A first function, such as a function of displaying information on a display screen of a vehicle, may be implemented through the first hardware unit 11. A second function, such as a function of performing emergency braking on a vehicle may be implemented through the second hardware unit 12. Functional safety level domain division is performed on the integrated circuit based on safety requirements of the first function and the second function. If the first function and the second function have different safety requirements, the integrated circuit may be divided into a first functional safety level domain 13 and a second functional safety level domain 14. A hardware unit in the first functional safety level domain 13 includes the first hardware unit 11. A hardware unit in the second functional safety level domain 14 includes the second hardware unit 12. Safety levels of the first functional safety level domain 13 and the second functional safety level domain 14 may be identical or different. The safety level of the first functional safety level domain 13 matches the safety requirement of the first function. The safety level of the second functional safety level domain 14 matches the safety requirement of the second function. For ease of description, description is performed below taking as an example that different functional safety level domains have different safety levels.

Hardware units in different functional safety level domains may access each other through a bus, thus enabling communication between the functional safety level domains. As shown in FIG. 1, the first hardware unit 11 and the second hardware unit 12 may access each other through a bus 15, which thereby enables communication between the first functional safety level domain 13 and the second functional safety level domain 14.

However, based on the above architecture, when hardware units in functional safety level domains of different safety levels access each other, once a fault occurs to a hardware unit in one functional safety level domain, the fault may cause not only a fault to another hardware unit in the functional safety level domain, but also a fault to the bus, and then a fault to a hardware unit in the other functional safety level domain sharing the bus. Particularly, once a fault occurs to a hardware unit in a functional safety level domain of a low safety level, it may cause a fault to occur to a hardware unit in a functional safety level domain of a high safety level, causing the fault to spread. For example, if the safety level of the first functional safety level domain 13 is lower than the safety level of the second functional safety level domain 14, when the first hardware unit 11 accesses the second hardware unit 12, once a fault occurs to the first hardware unit 11, such as when the first hardware unit 11 fails to respond to a request for access of the second hardware unit 12 in a long time, and the first hardware unit 11 hangs, it may cause the second hardware unit 12 to hang.

To solve the above technical problem, embodiments of this disclosure provide an apparatus and method for access through a bus in an integrated circuit.

The apparatus may include: a controller; a first hardware unit, corresponding to a first functional safety level domain; a second hardware unit, corresponding to a second functional safety level domain; and a register, storing first configuration information corresponding to the second hardware unit, the first configuration information including a second identification of a target hardware unit, the target hardware unit being in a functional safety level domain of a safety level higher than a safety level of the second functional safety level domain, wherein the first hardware unit is configured for generating a first request for access; the controller is configured for determining, based on the first request for access, a first identification of the first hardware unit; the controller is further configured for reading, from the register, the first configuration information; the controller is further configured for determining, based on the first identification and the second identification, an access permission the first hardware unit has to the second hardware unit; and the controller is further configured for controlling, based on the access permission the first hardware unit has to the second hardware unit, transmission of the first request for access from a bus to the second hardware unit.

The method includes: generating, through a first hardware unit in a first functional safety level domain, a first request for access; determining, based on the first request for access, a first identification of the first hardware unit; reading, from a register, first configuration information corresponding to a second hardware unit in a second functional safety level domain, the first configuration information including a second identification of a target hardware unit, the target hardware unit being in a functional safety level domain of a safety level higher than a safety level of the second functional safety level domain; determining, based on the first identification and the second identification, an access permission the first hardware unit has to the second hardware unit, i.e., a relation between the safety level of the first functional safety level domain where the first hardware unit is located and the safety level of the second functional safety level domain where the second hardware unit is located; and controlling, based on the access permission the first hardware unit has to the second hardware unit, transmission of the first request for access from a bus to the second hardware unit, which is equivalent to controlling, based on the relation between the safety level of the first functional safety level domain and the safety level of the second functional safety level domain, transmission of the first request for access from the bus to the second hardware unit. If in one of the first functional safety level domain and the second functional safety level domain that has the lower safety level, something goes wrong with a hardware unit, as it is enabled to control transmission of the first request for access from the bus to a hardware unit in the functional safety level domain of the higher safety level, a first request for access transmitted when something goes wrong with a hardware unit in the functional safety level domain of the low safety level may be controlled accordingly, which thereby enables to effectively guarantee a hardware unit in the functional safety level domain of the high safety level to operate normally, and then guarantee the safety requirement of the functional safety level domain of the high safety level.

The apparatus and method for access through a bus in this disclosure are further described below combining the accompanying drawings.

### Illustrative system

FIG. 2 is a diagram of architecture of an integrated circuit according to another illustrative embodiment of this disclosure.

As shown in FIG. 2, the integrated circuit may include N functional safety level domains, such as a first functional safety level domain 21, a second functional safety level domain 22, and so on, until an N-th functional safety level domain 2n. Each functional safety level domain includes at least one hardware unit. A hardware unit included in the first functional safety level domain 21 is referred to as a first hardware unit, and a hardware unit included in the second functional safety level domain 22 is referred to as a second hardware unit, and so on. The first functional safety level domain 21 may include a first hardware unit 211, a first hardware unit 212, to a first hardware unit 21n. The second functional safety level domain 22 may include a second hardware unit 221, a first hardware unit 222, to a second hardware unit 22n, and so on. The N-th functional safety level domain 2n may include an N-th hardware unit 2n1, an N-th hardware unit 2n2, to an N-th hardware unit 2nn.

Hardware units in the functional safety level domains may access each other through a bus 201, so as to implement communication between the functional safety level domains. A hardware unit may serve as a master to initiate accessing of another hardware unit, or as a slave to be accessed by another hardware unit. A hardware unit includes a master interface and a slave interface, and accesses the bus 201 through the master interface and the slave interface, respectively. A hardware unit serving as a master may transmit a request for access to the bus 201 through the master interface, and to the slave interface of a hardware unit serving as a slave through the bus 201.

As shown in FIG. 2, the integrated circuit further includes at least one controller. The at least one controller may be configured for controlling a request for access transmitted between the hardware units. The at least one controller correspond to a hardware unit. Each hardware unit corresponds to at least one controller group. Each controller group includes at least one controller. A controller group corresponding to a first hardware unit is referred to as a first controller group, a controller group corresponding to a second hardware unit is referred to as a second controller group, and so on. As shown in FIG. 2, the first hardware unit 211 to the first hardware unit 21n correspond respectively to the first controller group 2111 to the first controller group 21n1, the second hardware unit 221 to the second hardware unit 22n correspond respectively to the second controller group 2211 to the second controller group 22n1, ..., and the N-th hardware unit 2n1 to the N-th hardware unit 2nn correspond respectively to an N-th controller group 2n11 to an N-th controller group 2nn1.

In some embodiments, a controller group may control transmission of a request for access on the bus 201 based on at least one mechanism of processing. The at least one mechanism of processing is configured for preventing a hardware unit in a functional safety level domain of a low safety level from impacting a hardware unit in a functional safety level domain of a high safety level. A controller in a controller group corresponds to a mechanism of processing. Different controllers correspond to different mechanisms of processing. Transmission of a request for access on the bus 201 is controlled by a controller based on a corresponding mechanism of processing.

Mechanism types of mechanisms of processing correspond to different stages of transmission of a request for access on the bus 201. A stage of transmission of a request for access from a master to the bus 201 corresponds to a first mechanism type, and a stage of transmission of the request for access from the bus 201 to a slave corresponds to a second mechanism type. Based on a mechanism type of a mechanism of processing, controllers may be divided into controllers of different sides. A mechanism of processing of the first mechanism type corresponds to a master-side controller, and a mechanism of processing of the second mechanism type corresponds to a slave-side controller.

A hardware unit may transmit a request for access to a corresponding master-side controller through the master interface, and the request for access is transmitted by the master-side controller to the bus 201. The request for access may be transmitted to a slave-side controller through the bus 201, and by the slave-side controller to the slave interface of a corresponding hardware unit.

In some examples, the at least one mechanism of processing may include one or more of a firewall mechanism, a bandwidth limiting (Bandwidth_Limit, BW_Limit) mechanism, a hang detection (hang detect) mechanism, and a hang protection (hang prot) mechanism. The bandwidth limiting mechanism and the hang detection mechanism are mechanisms of processing of the first mechanism type, and the firewall mechanism and the hang protection mechanism are mechanisms of processing of the second mechanism type.

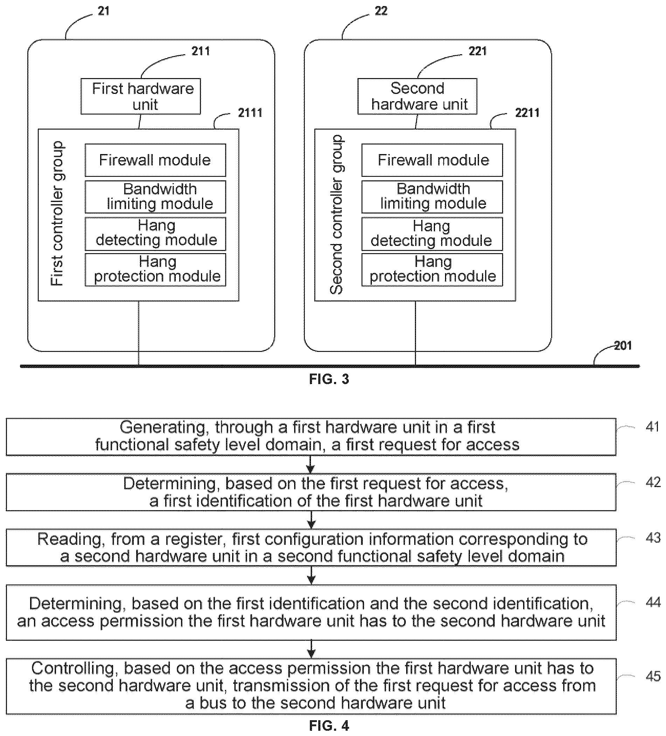

FIG. 3 is a diagram of architecture of an integrated circuit according to still another illustrative embodiment of this disclosure.

In some embodiments, if a controller group is enabled by configuration to control transmission of a request for access on the bus 201 based on the firewall mechanism, the bandwidth limiting mechanism, the hang detection mechanism, and the hang protection mechanism, as shown in FIG. 3, based on the architecture shown in FIG. 2, illustrating by taking a first controller group 2111 corresponding to a first hardware unit 211 and a second controller group 2211 corresponding to a second hardware unit 221 as an example, the first controller group 2111 and the second controller group 2211 respectively include four controllers. The four controllers may be hardware modules, such as a firewall module, a bandwidth limiting module, a hang detecting module, and a hang protection module. The firewall module corresponds to the firewall mechanism, the bandwidth limiting module corresponds to the bandwidth limiting mechanism, the hang detecting module corresponds to the hang detection mechanism, and the hang protection module corresponds to the hang protection mechanism. The bandwidth limiting module and the hang detecting module are master-side controllers, and the firewall module and the hang protection module are slave-side controllers.

Understandably, FIG. 3 merely shows illustrative connections between a hardware unit and a controller in a corresponding controller group, and between controllers in the controller group, which is not limited in embodiments of this disclosure. Illustratively, for the master-side controllers, the master may access the bus 201 sequentially through the hang detecting module and the bandwidth limiting module; and for the slave-side controllers, the slave may access the bus 201 sequentially through the firewall module and the hang protection module.

As shown in FIG. 2, the integrated circuit further includes a register 202. Configuration information for a hardware unit may be stored in advance in the register 202. The configuration information for the hardware unit may include unmodifiable configuration information and/or modifiable configuration information. The modifiable configuration information may include safety level related configuration information. For example, the safety level related configuration information may be changed flexibly based on change in a safety level of a functional safety level domain corresponding to the hardware unit.

In some examples, the configuration information for the hardware unit may include first configuration information. The first configuration information may include an identification of a target hardware unit. A safety level of a functional safety level domain corresponding to the target hardware unit is higher than the safety level of the functional safety level domain corresponding to the hardware unit. Illustratively, the identification of the target hardware unit may be an identifier (ID).

In some examples, the configuration information for the hardware unit may further include second configuration information. The second configuration information may include information on an access permission the target hardware unit has to an address region. The address region corresponds to the hardware unit.

In some embodiments, when hardware units in different functional safety level domains access each other, controller groups corresponding to the hardware units may read first configuration information and second configuration information corresponding to the hardware units from a corresponding register 202, and determine the access permission the hardware units have to each other based on these configuration information, and then control transmission of a request for access on the bus based on the determined access permission. As the first configuration information and the second configuration information are safety level related, it is equivalent to determining the access permission the hardware units have to each other based on safety levels. Accordingly, controlling transmission of a request for access on the bus based on the determined access permission is equivalent to controlling transmission of the request for access on the bus based on the safety levels. When something goes wrong with a hardware unit in a functional safety level domain of a low safety level, it may cause something to go wrong with the bus; as it is enabled to control transmission of a first request for access from the bus to a hardware unit in a functional safety level domain of a high safety level, a first request for access transmitted when something goes wrong with the hardware unit in the functional safety level domain of the low safety level may be controlled accordingly, which thereby enables to effectively guarantee the hardware unit in the functional safety level domain of the high safety level to operate normally, and then guarantee the safety requirement of the functional safety level domain of the high safety level.

### Illustrative method

FIG. 4 is a flowchart of a method for access through a bus according to an illustrative embodiment of this disclosure. This embodiment is applicable to an electronic device. The electronic device may include the integrated circuit as shown in FIG. 2 or FIG. 3. In this embodiment, a method for access through a bus in an integrated circuit is described, taking a process of access between a first hardware unit 211 in the first functional safety level domain 21 and a second hardware unit 221 in the second functional safety level domain 22 as an example. Understandably, the method for access through a bus in an integrated circuit is applicable to access between any hardware units in any functional safety level domains in the integrated circuit as shown in FIG. 2 or FIG. 3.

As shown in FIG. 4, the method includes step 41 to step 45 as follows.

Step 41, Generating, through a first hardware unit in a first functional safety level domain, a first request for access

If the first hardware unit 211 is to access the second hardware unit 221, the first hardware unit 211 generates the first request for access by serving as a master.

In some examples, the first request for access may include a command given to the second hardware unit 221, data transmitted to the second hardware unit 221, etc.

In some examples, the first request for access may carry an identification of the first hardware unit 211 (hereinafter, the identification of the first hardware unit 211 being referred to as "first identification", for short).

In some examples, the first request for access may further carry information on an object to which access is requested, such as an identification of the second hardware unit 221 (hereinafter, the identification of the second hardware unit 221 being referred to as "third identification" for short), an address to which access is requested, etc.

The first request for access is transmitted from the first hardware unit 211 to the second hardware unit 221. Illustratively, the first request for access is transmitted from the master interface of the first hardware unit 211 to a master-side controller of a first controller group 2111 corresponding to the first hardware unit 211, then from the master-side controller to the bus 201; from the bus 201 to the slave-side controller of a second controller group 2211 corresponding to the second hardware unit 221, and then from the slave-side controller to the slave interface of the second hardware unit 221.

Step 42-step 44 may be performed by a controller that has an authentication function in a master-side controller of the first controller group 2111 or a slave-side controller of the second controller group 2211. Illustratively, a firewall module of a slave-side controller of the second controller group 2211 has the authentication function, and the firewall module corresponding to the second hardware unit 221 may perform authentication on the first request for access. Hereinafter, an embodiment is described taking as an example that authentication is performed on the first request for access by the firewall module corresponding to the second hardware unit 221.

Step 42, Determining, based on the first request for access, a first identification of the first hardware unit

Illustratively, if the first request for access carries the first identification of the first hardware unit 211, the firewall module corresponding to the second hardware unit 221 may determine the first identification from the first request for access.

Step 43, Reading, from a register, first configuration information corresponding to a second hardware unit in a second functional safety level domain

Illustratively, if the first request for access carries the third identification of the second hardware unit 221, the firewall module corresponding to the second hardware unit 221 may determine the third identification from the first request for access. The firewall module corresponding to the second hardware unit 221 may read configuration information corresponding to all hardware units in the integrated circuit from the register 202. There is an index relation between configuration information corresponding to a hardware unit and the hardware unit. For example, the index relation may be an index relation between the identification of the hardware unit and the configuration information. The firewall module corresponding to the second hardware unit 221 may determine configuration information corresponding to the second hardware unit 221 from the configuration information corresponding to all the hardware units based on the index relation. Further, the firewall module corresponding to the second hardware unit 221 may determine, from the configuration information corresponding to the second hardware unit 221, the first configuration information corresponding to the second hardware unit 221.

The first configuration information includes a second identification of a target hardware unit, the target hardware unit being in a functional safety level domain of a safety level higher than a safety level of the second functional safety level domain 22. In other words, the target hardware unit has access permission to the second hardware unit 221. Understandably, a hardware unit in a functional safety level domain of a safety level lower than or equal to the safety level of the second functional safety level domain 22 has no access permission to the second hardware unit 221. Thus, it may be known that a relation between safety levels of functional safety level domains corresponding to hardware units may be represented by the access permission the hardware units have to each other.

Step 44, Determining, based on the first identification and the second identification, an access permission the first hardware unit has to the second hardware unit

The firewall module corresponding to the second hardware unit 221 may determine, based on the first identification and the second identification, the access permission the first hardware unit 211 has to the second hardware unit 221, i.e., may determine the relation between the safety levels of the first functional safety level domain 21 corresponding to the first hardware unit 2111 and of the second functional safety level domain 22 corresponding to the second hardware unit 221.

Illustratively, if the access permission the first hardware unit 211 has to the second hardware unit 221 is that the first hardware unit has access permission to the second hardware unit, it may be determined that the safety level of the first functional safety level domain 21 is higher than the safety level of the second functional safety level domain 22; if the access permission the first hardware unit 211 has to the second hardware unit 221 is that the first hardware unit has no access permission to the second hardware unit, it may be determined that the safety level of the first functional safety level domain 21 is lower than or equal to the safety level of the second functional safety level domain 22.

In some examples, the firewall module corresponding to the second hardware unit 221 may write the access permission the first hardware unit 211 has to the second hardware unit 221 in the register 202. Controllers in the first controller group 2111 and the second controller group 2211 may read, from the register 202, the access permission the first hardware unit 211 has to the second hardware unit 221.

In some examples, the firewall module corresponding to the second hardware unit 221 may transmit the access permission the first hardware unit 211 has to the second hardware unit 221 to controllers in the first controller group 2111 and the second controller group 2211.

Step 45, Controlling, based on the access permission the first hardware unit has to the second hardware unit, transmission of the first request for access from a bus to the second hardware unit

Illustratively, based on that the access permission the first hardware unit 211 has to the second hardware unit 221 is that the first hardware unit has access permission to the second hardware unit, i.e., based on that the safety level of the first functional safety level domain 21 corresponding to the first hardware unit 2111 is higher than the safety level of the second functional safety level domain 22 corresponding to the second hardware unit 221, it is enabled to control, through a master-side controller in the first controller group 2111 and a slave-side controller in the second controller group 2211, transmission of the first request for access from the bus 201 to the second hardware unit 221, to prevent the second hardware unit 221 from impacting the first hardware unit 211.

Based on that the access permission the first hardware unit 211 has to the second hardware unit 221 is that the first hardware unit has no access permission to the second hardware unit, i.e., based on that the safety level of the first functional safety level domain 21 corresponding to the first hardware unit 2111 is lower than or equal to the safety level of the second functional safety level domain 22 corresponding to the second hardware unit 221, it is enabled to control, through a master-side controller in the first controller group 2111 and a slave-side controller in the second controller group 2211, transmission of the first request for access from the bus 201 to the second hardware unit 221, to prevent the first hardware unit 211 from impacting the second hardware unit 221.

With a method for access through a bus in an integrated circuit according to embodiments of this disclosure, when a first hardware unit 211 in the first functional safety level domain 21 access a second hardware unit 221 in the second functional safety level domain 22, based on the access permission the first hardware unit 211 has to the second hardware unit 221, i.e., based on the relation between the safety level of the first functional safety level domain 21 corresponding to the first hardware unit 2111 and the safety level of the second functional safety level domain 22 corresponding to the second hardware unit 221, it is enabled to control, by at least one of a master-side controller in the first controller group 2111 corresponding to the first hardware unit 211 and a slave-side controller in the second controller group 2211 corresponding to the second hardware unit 221, transmission of a first request for access from the bus 201 to the second hardware unit 221, thereby preventing a problem with the bus 201 caused by a problem with a hardware unit in a functional safety level domain of a low safety level from impacting a hardware unit in a functional safety level domain of a high safety level, which then guarantees the safety requirement of the functional safety level domain of the high safety level.

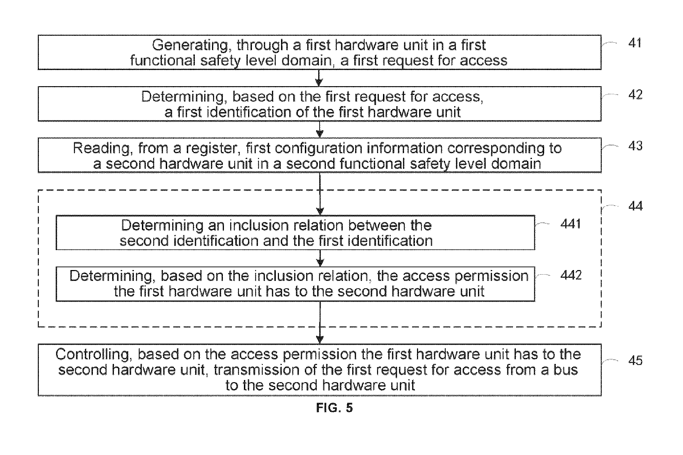

FIG. 5 is a flowchart of a method for access through a bus according to another illustrative embodiment of this disclosure.

In some embodiments, as shown in FIG. 5, based on the embodiment shown in FIG. 4, step 44 may include step 441-step 442.

Step 441, Determining an inclusion relation between the second identification and the first identification

The inclusion relation between the second identification and the first identification includes that the second identification includes the first identification and that the second identification does not include the first identification.

Illustratively, if the target hardware unit corresponding to the second hardware unit 221 includes the first hardware unit 211 to the first hardware unit 21n, the first configuration information corresponding to the second hardware unit 221 includes second identifications corresponding to the first hardware unit 211 to the first hardware unit 21n, such as 211 to 21n. Accordingly, it may be determined that the inclusion relation between the second identification and the first identification is that the second identification includes the first identification.

Illustratively, if the target hardware unit corresponding to the second hardware unit 221 does not include the first hardware unit 211 to the first hardware unit 21n, the first configuration information corresponding to the second hardware unit 221 does not include second identifications corresponding to the first hardware unit 211 to the first hardware unit 21n. Accordingly, it may be determined that the inclusion relation between the second identification and the first identification is that the second identification does not include the first identification.

Step 442, Determining, based on the inclusion relation, the access permission the first hardware unit has to the second hardware unit

If the inclusion relation is that the second identification includes the first identification, it may be determined that the access permission the first hardware unit 211 has to the second hardware unit 221 is that the first hardware unit has access permission to the second hardware unit. If the inclusion relation is that the second identification does not include the first identification, it may be determined that the access permission the first hardware unit 211 has to the second hardware unit 221 is that the first hardware unit has no access permission to the second hardware unit.

With a method for access through a bus in an integrated circuit according to embodiments of this disclosure, by determining an inclusion relation between the first identification of the first hardware unit 211 and the second identification of the target hardware unit corresponding to the second hardware unit 221, it is enabled to quickly determine the access permission the first hardware unit 211 has to the second hardware unit 221, which thereby enables to improve efficiency of controlling transmission of a first request for access from the bus 201 to the second hardware unit 221.

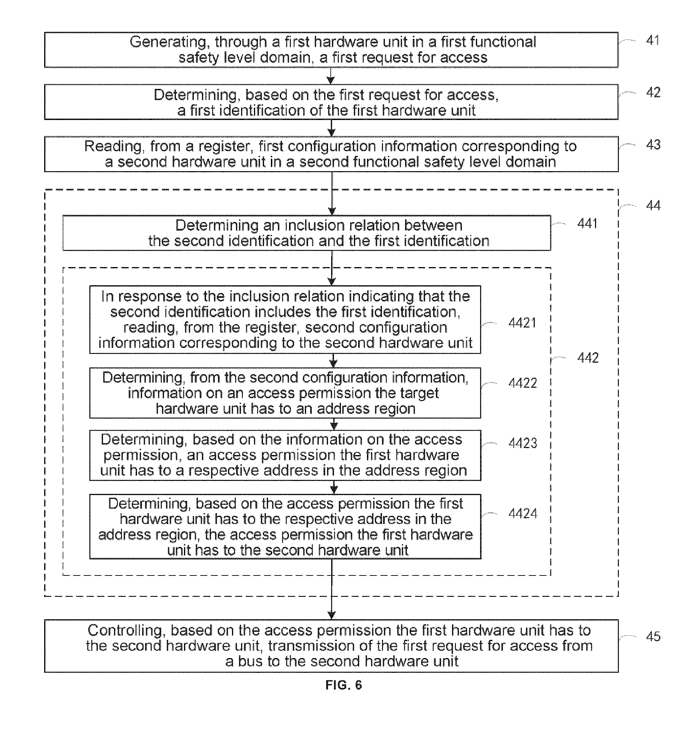

FIG. 6 is a flowchart of a method for access through a bus according to still another illustrative embodiment of this disclosure.

In some embodiments, as shown in FIG. 6, based on the embodiment shown in FIG. 5, step 442 may include step 4421-step 4424.

Step 4421, In response to the inclusion relation indicating that the second identification includes the first identification, reading, from the register, second configuration information corresponding to the second hardware unit

If the inclusion relation is that the second identification includes the first identification, it may be determined that the first hardware unit 211 has access permission to the second hardware unit 221.

To facilitate managing an accessible space of the second hardware unit 221, such as to facilitate writing/reading data in the accessible space of the second hardware unit 221 quickly and accurately, etc., the accessible space of the second hardware unit 221 may be divided into at least one subspace, and the access permission the target hardware unit corresponding to the second hardware unit 221 has to the at least one subspace may be limited. Based on this, second configuration information may be configured in advance for the second hardware unit 221. The second configuration information includes information on an access permission a target hardware unit corresponding to the second hardware unit 221 has to an address region. The address region corresponds to the second hardware unit 221, and includes an address of a subspace in the accessible space of the second hardware unit 221. In some cases, the address region may also be referred to as an address range.

In some examples, the information on the access permission may include an access permission the target hardware unit has to the respective address in the address region, such as whether the target hardware unit has access permission to the address; and if the target hardware unit has access permission to the address, a type of the access (such as a write access, a read access, etc.) the target hardware unit has to the address, etc.

In some examples, after the firewall module corresponding to the second hardware unit 221 has read, from the register 202, the configuration information corresponding to the second hardware unit 221, the second configuration information corresponding to the second hardware unit 221 may be determined from the configuration information corresponding to the second hardware unit 221.

Step 4422, Determining, from the second configuration information, information on an access permission the target hardware unit has to an address region

The firewall module corresponding to the second hardware unit 221 may determine, from content included in the second configuration information corresponding to the second hardware unit 221, an access permission a respective target hardware unit has to the address region of the second hardware unit 221.

Step 4423, Determining, based on the information on the access permission, an access permission the first hardware unit has to a respective address in the address region

The firewall module corresponding to the second hardware unit 221 may determine, from information on an access permission corresponding to the respective target hardware unit, information on an access permission corresponding to the first hardware unit 211, and determine, based on the information on the access permission corresponding to the first hardware unit 211, the access permission the first hardware unit 211 has to the respective address in the address region corresponding to the second hardware unit 221.

Illustratively, the address region corresponding to the second hardware unit 221 includes an address 2a, an address 2b, and an address 2c. The second configuration information corresponding to the second hardware unit 221 includes the information on the access permission corresponding to the first hardware unit 211. The information on the access permission may include that the first hardware unit 211 has access permission to the address 2a, and has no access permission to the address 2b and the address 2c. The firewall module corresponding to the second hardware unit 221 may determine, based on the information on the access permission, the access permission the first hardware unit 211 has to the address 2a, the address 2b, and the address 2c.

Step 4424, Determining, based on the access permission the first hardware unit has to the respective address in the address region, the access permission the first hardware unit has to the second hardware unit

The access permission the first hardware unit 211 has to the second hardware unit 221 is that the first hardware unit has access permission to the second hardware unit 221, has access permission to at least one address in the address region corresponding to the second hardware unit 221, and has no access permission to an address remaining in the address region.

With a method for access through a bus in an integrated circuit according to embodiments of this disclosure, by configuring second configuration information for a hardware unit in advance, it is enabled to effectively limit, when the hardware unit serves as a slave, an accessible space a master is allowed to access, thereby to facilitate more precise, detailed management of an accessible space of a respective hardware unit.

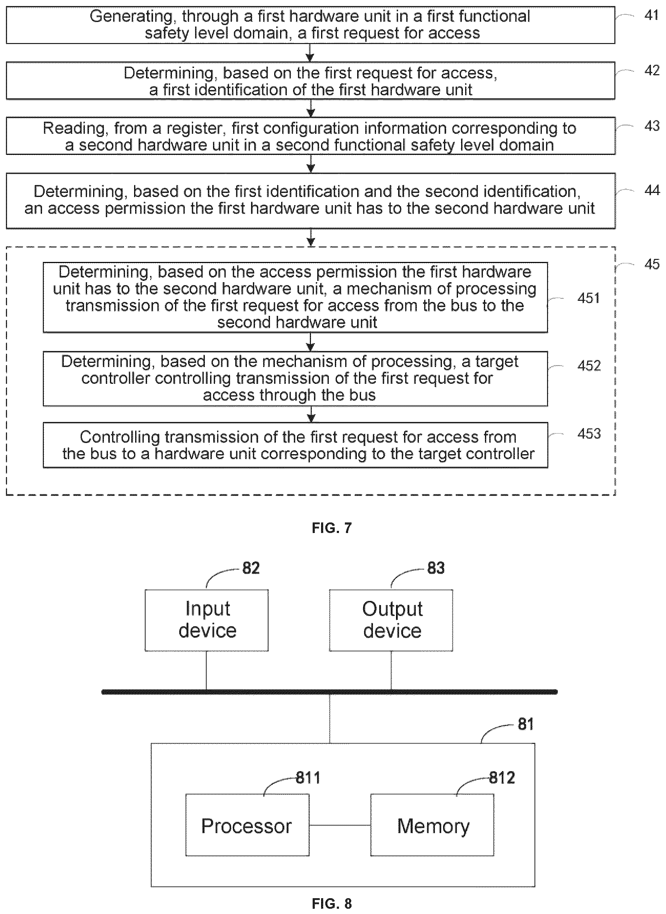

FIG. 7 is a flowchart of a method for access through a bus according to yet another illustrative embodiment of this disclosure.

In some embodiments, as shown in FIG. 7, based on the embodiment shown in FIG. 4, step 45 may include step 451-step 453.

Step 451, Determining, based on the access permission the first hardware unit has to the second hardware unit, a mechanism of processing transmission of the first request for access from the bus to the second hardware unit

A mechanism of processing is configured mainly for preventing a hardware unit in a functional safety level domain of a low safety level from impacting a hardware unit in a functional safety level domain of a high safety level, more particularly, for preventing impact on a hardware unit in a functional safety level domain of a high safety level when something goes wrong with a hardware unit in a functional safety level domain of a low safety level. Based on this, based on the access permission the first hardware unit 211 has to the second hardware unit 221, i.e., based on the relation between the safety level of the first functional safety level domain 21 and the safety level of the second functional safety level domain 22, a mechanism of processing for controlling transmission of a first request for access may be determined.

In response to that the access permission the first hardware unit 211 has to the second hardware unit 221 is that the first hardware unit has no access permission to the second hardware unit, i.e., the safety level of the first functional safety level domain 21 is lower than or equal to the safety level of the second functional safety level domain 22, to prevent the first hardware unit 211 from impacting the second hardware unit 221, a first mechanism of processing transmission of the first request for access from the bus 201 to the second hardware unit 221 may be determined.

In some examples, the first mechanism of processing may include one or more of the firewall mechanism and the bandwidth limiting mechanism.

In response to that the access permission the first hardware unit 211 has to the second hardware unit 221 is that the first hardware unit has access permission to the second hardware unit, i.e., that the safety level of the first functional safety level domain 21 is higher than the safety level of the second functional safety level domain 22, to prevent the second hardware unit 221 from impacting the first hardware unit 211, a second mechanism of processing transmission of the first request for access from the bus 201 to the second hardware unit 221 may be determined.

In some examples, the second mechanism of processing may include one or more of the hang detection mechanism and the hang protection mechanism.

Step 452, Determining, based on the mechanism of processing, a target controller controlling transmission of the first request for access through the bus

A mechanism type corresponding to the mechanism of processing may be determined. For example, the mechanism of processing is the firewall mechanism, then it may be determined that the firewall mechanism corresponds to the second mechanism type. As another example, the mechanism of processing is the bandwidth limiting mechanism, then it may be determined that the bandwidth limiting mechanism corresponds to the first mechanism type.

The target controller controlling transmission of the first request for access through the bus 201, i.e., the target controller for controlling transmission of the first request for access through the bus 201, may be determined based on the mechanism type corresponding to the mechanism of processing. Based on that the mechanism of processing corresponds to the first mechanism type, it may be determined that the target controller is a controller configured for executing the mechanism of processing in the first controller group 2111 corresponding to the first hardware unit 211. Based on that the mechanism of processing corresponds to the second mechanism type, it may be determined that the target controller is a controller configured for executing the mechanism of processing in the second controller group 2211 corresponding to the second hardware unit 221.

In some examples, based on a first mechanism of processing, a first controller may be determined to be the target controller controlling transmission of the first request for access through the bus. A mechanism type corresponding to the first mechanism of processing may be determined based on the first mechanism of processing, and the target controller configured for executing the first mechanism of processing may be determined based on the mechanism type corresponding to the first mechanism of processing.

Illustratively, if the first mechanism of processing includes the firewall mechanism and the bandwidth limiting mechanism, it may be determined that a first controller corresponding to the firewall mechanism is the firewall module corresponding to the second hardware unit 221, and that a first controller corresponding to the bandwidth limiting mechanism is a bandwidth limiting module corresponding to the first hardware unit 211.

In some examples, based on a second mechanism of processing, a second controller may be determined to be the target controller controlling transmission of the second request for access through the bus. A mechanism type corresponding to the second mechanism of processing may be determined based on the second mechanism of processing, and the target controller configured for executing the second mechanism of processing may be determined based on the mechanism type corresponding to the second mechanism of processing.

Illustratively, if the second mechanism of processing includes the hang detection mechanism and the hang protection mechanism, it may be determined that a second controller corresponding to the hang detection mechanism is the hang detecting module corresponding to the first hardware unit 211, and that a second controller corresponding to the hang protection mechanism is the hang protection module corresponding to the second hardware unit 221.

Step 453, Controlling transmission of the first request for access from the bus to a hardware unit corresponding to the target controller

The target controller controls, based on the corresponding mechanism of processing, transmission of the first request for access from the bus 201 to the hardware unit corresponding to the target controller.

Illustratively, if the target controller is the bandwidth limiting module corresponding to the first hardware unit 211, the hardware unit corresponding to the target controller is the second hardware unit 221; if the target controller is the hang detecting module corresponding to the first hardware unit 211, the hardware unit corresponding to the target controller is the second hardware unit 221; if the target controller is the firewall module corresponding to the second hardware unit 221, the hardware unit corresponding to the target controller is the second hardware unit 221; if the target controller is the hang protection module corresponding to the second hardware unit 221, the hardware unit corresponding to the target controller is the first hardware unit 211.

With a method for access through a bus in an integrated circuit according to embodiments of this disclosure, based on the access permission the first hardware unit 211 has to the second hardware unit 221, a mechanism of processing on which control of transmission of a first request for access is to be based may be determined precisely; then, a target controller executing the mechanism of processing may be determined precisely; and transmission of a first request for access is controlled by the target controller. Thus, while impact of a hardware unit in a functional safety level domain of a low safety level on a hardware unit in a functional safety level domain of a high safety level is prevented effectively, a non-target controller other than the target controller will not get involved in controlling transmission of a first request for access, which therefore enables the non-target controller to not interfere with transmission of the first request for access, and also enables to lower power consumed.

The controlling, by the target controller based on a respective mechanism of processing, transmission of the first request for access from the bus to the hardware unit corresponding to the target controller is described below.

In some embodiments, the mechanism of processing is the first mechanism of processing, such as the firewall mechanism, and the target controller is the firewall module corresponding to the second hardware unit 221.

Accordingly, a mode of controlling transmission of the first request for access from the bus 201 to a hardware unit corresponding to the target controller may include: intercepting transmission of the first request for access from the bus to a hardware unit corresponding to the first controller.

Illustratively, the first request for access is transmitted from the bus 201 to the firewall module corresponding to the second hardware unit 221, and intercepted by the firewall module, preventing the first request for access from continuing to be transmitted to the second hardware unit 221.

In some examples, the firewall module corresponding to the second hardware unit 221 may generate response information based on the first request for access, such as a response error; the first hardware unit 211 may determine, based on the response information, that it has no access permission to the second hardware unit 221.

In some examples, the firewall module corresponding to the second hardware unit 221 may process, based on a request type corresponding to the first request for access, data corresponding to the first request for access. If the request type corresponding to the first request for access is a request for data reading, the firewall module may generate a preset numerical value, such as a numerical value 0; if the request type corresponding to the first request for access is a request for data writing, the firewall module may discard write data corresponding to the first request for access.

In some examples, the firewall module corresponding to the second hardware unit 221 may generate an interrupt signal corresponding to the first request for access. The interrupt signal is configured for instructing to interrupt accessing the second hardware unit 221 by the first hardware unit 211. Accordingly, a record of interrupting access of the second hardware unit 221 by the first hardware unit 211 may be written in the register 202. The record may be queried. The record may further be processed, such as removed, blocked, etc.

With a method for access through a bus in an integrated circuit according to embodiments of this disclosure, a request for access transmitted by a hardware unit in a functional safety level domain of a low safety level to a hardware unit in a functional safety level domain of a high safety level is enabled to be intercepted, which enables to effectively limit access of the hardware unit in the functional safety level domain of the high safety level by the hardware unit in the functional safety level domain of the low safety level. Therefore, if something goes wrong with the hardware unit in the functional safety level domain of the low safety level, the hardware unit in the functional safety level domain of the high safety level is still enabled to operate normally.

In some embodiments, the mechanism of processing is the first mechanism of processing, such as the bandwidth limiting mechanism, and the target controller is the bandwidth limiting module corresponding to the first hardware unit 211.

Accordingly, the mode of controlling transmission of the first request for access from the bus to a hardware unit corresponding to the target controller may include: determining, based on a safety level of the first functional safety level domain 21, a first bandwidth threshold corresponding to a first hardware unit 211; and controlling, based on the first bandwidth threshold, transmission of the first request for access from the bus 201 to a hardware unit corresponding to a first controller.

The register 202 may be provided in advance with a correspondence of a safety level to a bandwidth threshold. The bandwidth threshold indicates a maximal bus bandwidth a hardware module in a functional safety level domain of the safety level may use in accessing the bus. The bandwidth limiting module corresponding to the first hardware unit 211 may read, from the register 202, the correspondence, and determine, based on the safety level of the first functional safety level domain 21, the first bandwidth threshold corresponding to the first hardware unit 211. Then, the bandwidth limiting module corresponding to the first hardware unit 211 may determine a bus bandwidth being used by the first hardware unit 211, such as a first bandwidth.

In some examples, bandwidth thresholds corresponding to different safety levels may be determined based on a safety level and a bus bandwidth. For example, the higher a safety level is, the higher a bus bandwidth proportion corresponding to the safety level, and the lower a safety level is, the lower a bus bandwidth proportion corresponding to the safety level. Thus, a bandwidth threshold corresponding to a safety level is a product of a bus bandwidth proportion corresponding to the safety level and the bus bandwidth. Understandably, in case of a certain bus bandwidth, the higher a safety level is, the higher a corresponding bandwidth threshold, and the lower a safety level is, the lower a corresponding bandwidth threshold.

Accordingly, the higher a safety level is, the higher a corresponding bandwidth threshold, i.e., guaranteeing that a hardware unit in a functional safety level domain of a high safety level may use more of the bus bandwidth; and the lower a safety level is, the lower a corresponding bandwidth threshold, i.e., preventing a hardware unit in a functional safety level domain of a low safety level from occupying too much of the bus bandwidth, so as to leave more of the bus bandwidth to a hardware unit in a functional safety level domain of a high safety level.

In some examples, the bandwidth limiting module may determine a bus transmission bandwidth corresponding to requests for access that are transmitted by the first hardware unit 211 in a preset unit duration. Bus transmission bandwidths corresponding to the first hardware unit 211 respectively in a read channel and a write channel in the preset unit duration may be determined, and a sum of the bus transmission bandwidths corresponding respectively to the read channel and the write channel is computed. A first bandwidth corresponding to the first hardware unit 211 may be obtained by computing a ratio of the bus transmission bandwidth corresponding to the requests for access that are transmitted by the first hardware unit 211 in the preset unit duration to the preset unit duration.

The bandwidth limiting module controls, based on the first bandwidth and the first bandwidth threshold, transmission of the first request for access from the bus 201 to the hardware unit corresponding to the first controller. The first controller is the bandwidth limiting module, and a hardware unit corresponding to the bandwidth limiting module is the second hardware unit 221.

If the first bandwidth is less than the first bandwidth threshold, the bandwidth limiting module does not limit transmission of the first request for access; if the first bandwidth is greater than or equal to the first bandwidth threshold, the bandwidth limiting module limits transmission of the first request for access, for example, intercepts transmission to the bus 201 of the first request for access, or lowers a number of first requests for access transmitted to the bus 201 in a unit time, thus, lowering occupation of the bus bandwidth by the first hardware unit 211.

With a method for access through a bus in an integrated circuit according to embodiments of this disclosure, by allocating different bandwidth thresholds for different safety levels, and by controlling that a bus bandwidth occupied by requests for access transmitted by a hardware unit does not exceed a respective bandwidth threshold, it is enabled to effectively limit a bus bandwidth occupied by a hardware unit in a functional safety level domain of a low safety level, reducing occupation of the bus bandwidth by the hardware unit in the functional safety level domain of the low safety level, guaranteeing that a hardware unit in a functional safety level domain of a high safety level may use more of the bus bandwidth.

In some embodiments, the mechanism of processing is the second mechanism of processing, such as the hang detection mechanism, and the target controller is the hang detecting module corresponding to the first hardware unit 211.

Accordingly, the mode of controlling transmission of the first request for access from the bus 201 to the hardware unit corresponding to the target controller may include: determining a target request for access in the first request for access, the target request for access being a request for access to which timer for responding has run out; generating an interrupt signal corresponding to the target request for access, wherein the interrupt signal may be configured for instructing to interrupt processing the target request for access; and controlling, based on the interrupt signal, transmission of the first request for access from the bus 201 to a hardware unit corresponding to a second controller.

The hang detecting module corresponding to the first hardware unit 211 may read, from the register 202, a duration threshold, and monitor a respective first request for access based on the duration threshold. If response information of the second hardware unit 221 for the first request for access is detected in the duration threshold, the first request for access is a request for access with a normal response. If the response information of the second hardware unit 221 for the first request for access is not detected in the duration threshold, the first request for access is the target request for access to which the timer for responding has run out.

The hang detecting module may count a first request for access getting no response through a counter, wherein a numerical value of the counter is increased by 1 when the first hardware unit generates a first request for access, and decreased by 1 once a first request for access gets a response. When the numerical value of the counter is 0, it indicates that currently there is no first request for access which gets no response, and when the numerical value of the counter is not 0, it indicates that currently there is a first request for access which gets no response. If upon reaching the duration threshold, the numerical value of the counter is not 0, it shows that there is a first request for access which gets no response, and the first request for access which gets no response is the target request for access.

In some examples, the hang detecting module may determine first requests for access corresponding to one second hardware unit 221, and monitor whether timers for the first requests for access corresponding to the one second hardware unit 221 run out.

The hang detecting module may separately monitor whether timer for each first request for access has run out. The hang detecting module creates a corresponding timer for each first request for access, and if the hang detecting module detects no response of the second hardware unit 221 to the first request for access before the duration of the timer reaches the duration threshold, it is determined that the timer for responding to the first request for access has run out, and the first request for access is the target request for access.

Or, the hang detecting module may monitor whether a timer for first requests for access corresponding to one channel type has run out. A channel type of a data channel between the first hardware unit 211 and the second hardware unit 221 may include a write channel, a read channel, and an auxiliary channel (AC). First requests for access corresponding to the write channel may be monitored as a whole, and first requests for access corresponding to the read channel may be monitored as a whole. When monitoring is performed on first requests for access taken as a whole, a corresponding timer is created for a corresponding channel. The timer is started when the numerical value of the counter is not 0 for the first time, and restarted every time it is detected that any one first request for access on the channel gets its response. If the hang detecting module detects no response to any one first request for access on the channel before the duration of the timer reaches the duration threshold, it is determined that the timer for responding to the first requests for access corresponding to the channel has run out, and the first requests for access are target requests for access. The hang detecting module separately monitors whether timer for each first request for access corresponding to the AC has run out, which is not elaborated here.

In some examples, the hang detecting module may monitor whether a timer for first requests for access corresponding to one channel type has run out. First requests for access corresponding to one channel type may include first requests for access corresponding to different second hardware units 221.

Monitoring may be performed on first requests for access corresponding to the write channel taken as a whole. Monitoring may be performed on first requests for access corresponding to the read channel taken as a whole. Monitoring may be performed on first requests for access corresponding to the AC taken as a whole. When monitoring is performed on first requests for access taken as a whole, a corresponding timer is created for a corresponding channel. The timer is started when the numerical value of the counter is not 0 for the first time, and restarted every time it is detected that any one first request for access on the channel gets its response. If the hang detecting module detects no response to any one first request for access on the channel before the duration of the timer reaches the duration threshold, it is determined that the timer for responding to the first requests for access corresponding to the channel has run out, and the first requests for access are target requests for access.

It may be determined that the first hardware unit 211 is in a hang state if the hang detecting module determines that there is a target request for access. Then, the hang detecting module corresponding to the first hardware unit 211 interrupts processing the target request for access based on the interrupt signal, to interrupt accessing the second hardware unit 221 by the first hardware unit 211.

In some examples, the hang detecting module may write a record of generating the interrupt signal in the register 202. When accessing the first hardware unit 211, another hardware unit may read the record from the register 202, thereby avoiding accessing the first hardware unit 211 in the hang state.

With a method for access through a bus in an integrated circuit according to embodiments of this disclosure, it is determined whether the first hardware unit 211 is in the hang state by detecting a target request for access in the first request for access, the target request for access being a request for access to which timer for responding has run out, and when it is determined that the first hardware unit 211 is in the hang state, a warning is sent such as by generating an interrupt signal and writing a record of generating the interrupt signal in the register 202, etc., to enable a hardware unit in a functional safety level domain of a high safety level which is about to access the first hardware unit 211 to determine that the first hardware unit 211 is in the hang state, avoiding continuing access of the first hardware unit 211, thereby avoiding impact of accessing the first hardware unit 211 on itself.

In some embodiments, the mechanism of processing is the second mechanism of processing, such as the hang protection mechanism, and the target controller is the hang protection module corresponding to the second hardware unit 221.

Accordingly, the mode of controlling transmission of the first request for access from the bus 201 to the hardware unit corresponding to the target controller may include: determining a target request for access in the first request for access, the target request for access being a request for access to which timer for responding has run out; generating response information for the target request for access; and controlling, based on the response information, transmission of the first request for access from the bus 201 to a hardware unit corresponding to a second controller.

The hang protection module corresponding to the second hardware unit 221 monitors respectively whether timers for first requests for access corresponding to one channel type have run out.

In some examples, the hang protection module monitors, based on a sequence of transmission of the first requests for access, whether the timers for the first requests for access have run out, and after a first target request for access has been monitored, may determine each first request for access located after the first target request for access in the sequence of transmission to be a target request for access.

In some examples, in determining a target request for access, the hang protection module monitors a respective matter in a first request for access through a monitoring strategy corresponding to a request type thereof, to determine a type of an error causing an overdue response.

Illustratively, for a read command request in a first request for access, a matter to be monitored may include whether handshake succeeds for each command channel, whether handshake succeeds for a read-the-last-data signal (RLAST) corresponding to the each command, whether a number of read data (RDATA) transmitted successfully meets a need of a current command, etc.

Illustratively, for a write command request in a first request for access, a matter to be monitored may include whether handshake succeeds for each command channel, whether handshake is returned successfully for a write response signal (BRESP) corresponding to the each command, whether a number of write data (WDATA) transmitted successfully meets a need of a current command, etc.

In some examples, the hang protection module may write information corresponding to the first target request for access, such as a request type, a type of an error, etc., in the register 202.

In some examples, the hang protection module may determine a corresponding response mechanism based on a request type and a type of an error which correspond to a target request for access, and generate response information based on the response mechanism.

Illustratively, for a read command request in a first request for access, a corresponding response mechanism may be determined based on a type of an error corresponding to the read command request. The response mechanism may include constructing a read address ready signal (ARREADY) to complete receiving of a respective command; constructing missing read data / a read data valid signal (RVALID), and returning all-0 read data; constructing a read-the-last-data signal / a read response signal (RRESP), and returning response error; discarding redundant read data; discarding any downstream redundant signal, and recording accordingly.

Illustratively, for a write command request in a first request for access, a corresponding response mechanism may be determined based on a type of an error corresponding to the write command request. The response mechanism may include constructing a write address ready signal (AWREADY) to complete receiving of a respective command; constructing the write address ready signal to complete receiving of write data, and discarding the write data; constructing a write response signal / a write response valid signal (BVALID) corresponding to missing write data, and returning response error; constructing a write response valid signal / the write response signal, and returning response error; discarding any downstream redundant signal, and recording accordingly.

In some examples, the information on the first target request for access may be read from the register 202, and the request type of the first target request for access may be determined based on the information. Another target request for access corresponding to the same channel type as the first target request for access corresponds to the same request type as the first target request for access. Therefore, it is enabled to quickly determine the request type of the another target request for access based on the request type of the first target request for access. For a non-first target request for access, the response mechanism may be determined based on the request type, and the response information may be generated based on the response mechanism.

Illustratively, for a non-first target request for access of a request type of a read command request, the response mechanism may include constructing a read address ready signal for receiving, and returning all-0 read data and response error.

Illustratively, for a non-first target request for access of a request type of a write command request, the response mechanism may include constructing a write address ready signal for receiving, discarding all received write data, and returning response error.

A hardware unit corresponding to the hang protection module is the first hardware unit 211, and the hang protection module controls transmission of the response information from the bus 201 to the first hardware unit 211, such that when the second hardware unit 221 is in the hang state, by sending the response information constructed by the hang protection module to the first hardware unit 211, it is enabled to end accessing the second hardware unit 221 by the first hardware unit 211, to avoid causing the first hardware unit 211 to hang.

With a method for access through a bus in an integrated circuit according to embodiments of this disclosure, after it has been determined that a timer runs out before a hardware unit in a functional safety level domain of a low safety level responds to a request for access from a hardware unit in a functional safety level domain of a high safety level, by constructing response information and transmitting the response information to the hardware unit in the functional safety level domain of the high safety level, it is enabled to end the current access, which thereby enables, when the hardware unit in the functional safety level domain of the low safety level is in the hang state, the hardware unit in the functional safety level domain of the high safety level to still obtain a response, and still operate normally.

### Illustrative electronic device

FIG. 8 is a diagram of a structure of an electronic device according to an illustrative embodiment of this disclosure.

As shown in FIG. 8, the electronic device includes an integrated circuit 81. The integrated circuit 81 may be the integrated circuit as shown in FIG. 2 or FIG. 3. The integrated circuit 81 includes at least one processor 811 and a memory 812.

The processor 811 may be a central processing unit (CPU) or another form of processing unit having a data processing capability and/or an instruction execution capability, and may control other components in the electronic device to implement desired functions.

The memory 812 may include one or more computer program products, which may include various forms of computer readable storage media, such as a volatile memory and/or a non-volatile memory. The volatile memory may include, for example, random access memory (RAM) and/or cache. The nonvolatile memory may include, for example, read-only memory (ROM), hard disk, flash memory, etc. One or more computer program instructions may be stored on the computer readable storage medium. The processor 811 may execute one or more of the program instructions to implement a desired function of the electronic device, the method for access through a bus according to the various embodiments of this disclosure that are described above, and/or other desired functions.

In an example, the electronic device may further include an input device 82 and an output device 83. These components are connected to each other through a bus system and/or another form of connection mechanism (not shown).

Of course, for simplicity, FIG. 8 shows only some of components in the electronic device that are related to this disclosure, and components such as a bus and an input/output interface are omitted. In addition, according to specific application situations, the electronic device may further include any other appropriate components.

### Illustrative computer program product and computer-readable storage medium

In addition to the foregoing method and device, embodiments of this disclosure may also relate to a computer program product, which includes computer program instructions. When the instructions are run by a processor, the processor is enabled to perform the steps, of the method for access through a bus according to the embodiments of this disclosure, that are described in the "Illustrative method" section of this specification.

The computer program product may be program code, written with one or any combination of a plurality of programming languages, that is configured to perform the operations in the embodiments of this disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, embodiments of this disclosure may further relate to a computer readable storage medium, which stores computer program instructions. When the computer program instructions are run by a processor, the processor is enabled to perform the steps, of the method for access through a bus according to the embodiments of this disclosure, that are described in the "Illustrative method" section as described above.

The computer readable storage medium may be one readable medium or any combination of a plurality of readable media. The readable medium may be a readable signal medium or a readable storage medium. The readable storage medium may include, for example but is not limited to electricity, magnetism, light, electromagnetism, infrared ray, or a semiconductor system, an apparatus, or a device, or any combination of the above. More specific examples (a non-exhaustive list) of the readable storage medium include: an electrical connection having one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments. However, advantages, superiorities, effects, etc., mentioned in this disclosure are merely examples but are not for limitation, and it cannot be considered that these advantages, superiorities, effects, etc., are necessary for each embodiment of this disclosure. Moreover, specific details described above are merely for examples and for ease of understanding, rather than limitations. The details described above do not limit that this disclosure must be implemented by using the foregoing specific details.

A person skilled in the art may make various modifications and variations to this disclosure without departing from the spirit and the scope of this application. In this way, if these modifications and variations of this application fall within the scope of the claims and equivalent technologies of the claims of this disclosure, this disclosure also intends to include these modifications and variations.

## Claims

1. A method for access through a bus (15, 201) in an integrated circuit (81), including:
generating (41), through a first hardware unit (11, 211-21n) in a first functional safety level domain (13, 21), a first request for access;
determining (42), based on the first request for access, a first identification of the first hardware unit (11, 211-21n);
reading (43), from a register (202), first configuration information corresponding to a second hardware unit (12, 221-22n) in a second functional safety level domain (14, 22), the first configuration information including a second identification of a target hardware unit, the target hardware unit being in a functional safety level domain of a safety level higher than a safety level of the second functional safety level domain (14, 22);
determining (44), based on the first identification and the second identification, an access permission the first hardware unit (11, 211-21n) has to the second hardware unit (12, 221-22n); and
controlling (45), based on the access permission the first hardware unit (11, 211-21n) has to the second hardware unit (12, 221-22n), transmission of the first request for access from a bus (15, 201) to the second hardware unit (12, 221-22n).

2. The method according to claim 1, wherein the determining (44), based on the first identification and the second identification, an access permission the first hardware unit (11, 211-21n) has to the second hardware unit (12, 221-22n) includes:
determining (441) an inclusion relation between the second identification and the first identification; and
determining (442), based on the inclusion relation, the access permission the first hardware unit (11, 211-21n) has to the second hardware unit (12, 221-22n).

3. The method according to claim 2, wherein the determining (442), based on the inclusion relation, the access permission the first hardware unit (11, 211-21n) has to the second hardware unit (12, 221-22n) includes:
in response to the inclusion relation indicating that the second identification includes the first identification, reading (4421), from the register (202), second configuration information corresponding to the second hardware unit (12, 221-22n);
determining (4422), from the second configuration information, information on an access permission the target hardware unit has to an address region, wherein the address region corresponds to the second hardware unit (12, 221-22n);
determining (4423), based on the information on the access permission, an access permission the first hardware unit (11, 211-21n) has to a respective address in the address region; and
determining (4424), based on the access permission the first hardware unit (11, 211-21n) has to the respective address in the address region, the access permission the first hardware unit (11, 211-21n) has to the second hardware unit (12, 221-22n).

4. The method according to any one of claims 1 to 3, wherein the controlling (45), based on the access permission the first hardware unit (11, 211-21n) has to the second hardware unit (12, 221-22n), transmission of the first request for access from a bus (15, 201) to the second hardware unit (12, 221-22n) includes:
determining (451), based on the access permission the first hardware unit (11, 211-21n) has to the second hardware unit (12, 221-22n), a mechanism of processing transmission of the first request for access from the bus (15, 201) to the second hardware unit (12, 221-22n),
determining (452), based on the mechanism of processing, a target controller controlling transmission of the first request for access through the bus (15, 201); and
controlling (453) transmission of the first request for access from the bus (15, 201) to a hardware unit corresponding to the target controller.

5. The method according to claim 4, wherein the determining, based on the access permission the first hardware unit (11, 211-21n) has to the second hardware unit (12, 221-22n), a mechanism of processing transmission of the first request for access from the bus (15, 201) to the second hardware unit (12, 221-22n) includes:
in response to the access permission the first hardware unit (11, 211-21n) has to the second hardware unit (12, 221-22n) being that the first hardware unit (11, 211-21n) has no access permission to the second hardware unit (12, 221-22n), determining a first mechanism of processing transmission of the first request for access from the bus (15, 201) to the second hardware unit (12, 221-22n); or
in response to the access permission the first hardware unit (11, 211-21n) has to the second hardware unit (12, 221-22n) being that the first hardware unit (11, 211-21n) has access permission to the second hardware unit (12, 221-22n), determining a second mechanism of processing transmission of the first request for access from the bus (15, 201) to the second hardware unit (12, 221-22n).

6. The method according to claim 4, wherein the determining, based on the mechanism of processing, a target controller controlling transmission of the first request for access through the bus (15, 201) includes:
determining, based on a first mechanism of processing, a first controller to be the target controller controlling transmission of the first request for access through the bus (15, 201); or
determining, based on a second mechanism of processing, a second controller to be the target controller controlling transmission of the first request for access through the bus (15, 201).

7. The method according to claim 6, wherein the controlling transmission of the first request for access from the bus (15, 201) to a hardware unit corresponding to the target controller includes:
intercepting transmission of the first request for access from the bus (15, 201) to a hardware unit corresponding to the first controller.

8. The method according to claim 4, wherein the controlling transmission of the first request for access from the bus (15, 201) to a hardware unit corresponding to the target controller includes:
determining, based on a safety level of the first functional safety level domain (13, 21), a first bandwidth threshold corresponding to a first hardware unit (11, 211-21n); and
controlling, based on the first bandwidth threshold, transmission of the first request for access from the bus (15, 201) to a hardware unit corresponding to a first controller.

9. The method according to claim 4, wherein the controlling transmission of the first request for access from the bus (15, 201) to a hardware unit corresponding to the target controller includes:
determining a target request for access in the first request for access, the target request for access being a request for access to which timer for responding has run out;
generating an interrupt signal corresponding to the target request for access; and
controlling, based on the interrupt signal, transmission of the first request for access from the bus (15, 201) to a hardware unit corresponding to a second controller.

10. The method according to claim 4, wherein the controlling transmission of the first request for access from the bus (15, 201) to a hardware unit corresponding to the target controller includes:
determining a target request for access in the first request for access, the target request for access being a request for access to which timer for responding has run out;
generating response information for the target request for access; and
controlling, based on the response information, transmission of the first request for access from the bus (15, 201) to a hardware unit corresponding to a second controller.

11. An integrated circuit (81), including:
a controller;
a first hardware unit (11, 211-21n), corresponding to a first functional safety level domain (13, 21);
a second hardware unit (12, 221-22n), corresponding to a second functional safety level domain (14, 22); and
a register (202), storing first configuration information corresponding to the second hardware unit (12, 221-22n), the first configuration information including a second identification of a target hardware unit, the target hardware unit being in a functional safety level domain of a safety level higher than a safety level of the second functional safety level domain (14, 22),
wherein
the first hardware unit (11, 211-21n) is configured for generating a first request for access;
the controller is configured for determining, based on the first request for access, a first identification of the first hardware unit (11, 211-21n);
the controller is further configured for reading, from the register (202), the first configuration information;
the controller is further configured for determining, based on the first identification and the second identification, an access permission the first hardware unit (11, 211-21n) has to the second hardware unit (12, 221-22n); and
the controller is further configured for controlling, based on the access permission the first hardware unit (11, 211-21n) has to the second hardware unit (12, 221-22n), transmission of the first request for access from a bus (15, 201) to the second hardware unit (12, 221-22n).

12. The integrated circuit (81) according to claim 11, wherein the controller is further configured for:
determining an inclusion relation between the second identification and the first identification; and
determining, based on the inclusion relation, the access permission the first hardware unit (11, 211-21n) has to the second hardware unit (12, 221-22n).

13. The integrated circuit (81) according to claim 11 or 12, wherein the controller is further configured for:
determining, based on the access permission the first hardware unit (11, 211-21n) has to the second hardware unit (12, 221-22n), a mechanism of processing transmission of the first request for access from the bus (15, 201) to the second hardware unit (12, 221-22n);
determining, based on the mechanism of processing, a target controller controlling transmission of the first request for access through the bus (15, 201); and
controlling transmission of the first request for access from the bus (15, 201) to a hardware unit corresponding to the target controller.

14. A computer-readable storage medium, storing a computer program for implementing the method according to any one of claims 1 to 10.

15. An electronic device, including:
a processor (811); and
a memory (812) configured for storing processor-executable instructions, wherein
the processor (811) is configured for reading and executing the processor-executable instructions in the memory (812) to implement the method according to any one of claims 1 to 10.
